# EUROPEAN PATENT APPLICATION

(11) **EP 1 246 126 A2**
(43) Date of publication of application: **02.10.2002**
(21) Application number: 02251065.5
(22) Date of filing: 16.02.2002
(51) Int. Cl.: G06K 11/18

(54) **Input device capable of generating different input signals on single operating surface**

(30) Priority: 12.03.2001 JP 2001068294
(71) Applicant: ALPS ELECTRIC CO., LTD., Ota-ku Tokyo (JP)
(72) Inventor: Sato, Tadamitsu, c/o Alps Electric Co Ltd, Ota-ku, Tokyo (JP)
(74) Representative: Kensett, John Hinton

(57) **Abstract**

An input device (1) has a combination of a plurality of capacitance and flat-type detection members (4). Each detection member can be switched on and off, and an indicator (5) indicating an individual input portion is formed on the surface of the detection member. A controller (11) provided in the input device can switch between a single input mode and a motion input mode. In the single input mode, when one of the detection members is operated, data in accordance with the switching-on or switching-off of the operated detection member is generated. In the motion input mode, when some of the detection members are continuously operated, coordinate data in accordance with the positional relationship of the operated detection members is generated.

## Description

### BACKGROUND OF THE INVENTION

### 1. Field of the Invention

The present invention relates to an input device which is controlled by a controller and which can generate different input signals on a single operating surface.

### 2. Description of the Related Art

Input devices, such as a keyboard and pointing device, are typically connected to a computer and are used to input data into or to operate the computer. For example, moving a cursor or pointer onto a mark, which is referred to as an icon, displayed on the screen to give an instruction causes the subsequent processing to be initiated.

This type of pointing device may have an operating surface with flat-type (pad-type) detection members. In such a type, moving a finger on the operating surface causes the generation of movement data, so that a cursor on the screen moves to a desired position in accordance with the direction of the finger movement. When such detection members are used to input numbers or symbols, the input is performed by clicking number keys displayed as images on the screen or by pressing number keys on the keyboard.

An input device which includes such detection members, however, is designed based on the size of the operating surface. Thus, varying the size thereof requires a change in the design itself, making it impossible to be used as an input device for various types of equipment. Consequently, such an input device has been utilized in limited applications only, for example, in computers.

### SUMMARY OF THE INVENTION

The present invention has been made to overcome the conventional problems, and an object thereof is to provide an input device in which the operating surface thereof can be changed to various sizes such that the input device can be mounted on various types of equipment.

To this end, according to a first aspect of the present invention, there is provided an input device which is controlled by a controller. The input device includes a plurality of detection members which are provided on an operating surface and which are switched on and off; and indicators which indicate corresponding input portions of the detection members. The controller generates an operation signal in accordance with the switching-on or switching-off. The controller allows a single input mode, in which operation of one of the detection members is processed as an operation input with respect to a corresponding one of the input portions, to be set, and allows a motion input mode, in which continuous operation of some of the detection members is processed as a motion operation input in accordance with the positional relationship of the operated detection members, to be set.

According to a second aspect of the present invention, there is provided an input device which is controlled by a controller. The input device includes a plurality of detection members which are provided on an operating surface and which detect a contact and a movement of a manipulator; and indicators which indicate corresponding input portions of the detection members. The controller generates an operation signal in accordance with the operation of at least one of the detection members. The controller allows a single input mode, in which a touch of a manipulator on one of the detection members is processed as an operation input with respect to a corresponding one of the input portions, to be set, and allows a motion input mode, in which continuous movement of the manipulator across some of the detection members is processed as a motion operation input in accordance with the positional relationship of the operated detection members, to be set.

Thus, according to the present invention, the detection members can be combined into any arrangement to provide the input device with an arbitrary size and shape, so that they can be mounted on equipment with various sizes. Additionally, since the input device allows for two different types of input operations on the single operating surface, it is advantageously used in multifunctional applications, with enhanced operability.

The single input mode and the motion input mode may be switched by external input using another input means that is provided on the detection member or the operating surface.

Preferably, in the state in which the motion input mode is set, when one of the detection members is operated, the controller recognizes the input portion of the operated detection member as a reference position and sets a plurality of the detection members that are adjacent to the operated detection member into a detectable state.

Preferably, subsequent to the operation of the detection member, when one of the detection members that are adjacent to the operated detection member is operated, the controller may recognize the input portion of the newly operated detection member as a new reference position and sets a plurality of the detection members that are adjacent to the newly operated detection member into a detectable state.

Preferably, the input device is provided with display means, and in the setting of the motion input mode, the display means displays information in accordance with the motion input information resulting from the operation of the detection members.

Preferably, the display means is provided on the same housing on which the detection members are provided, or is provided separately from the housing.

An embodiment of the present invention will now be described, by way of example, with reference to the accompanying diagrammatic drawings, in which:
FIG. 1 is a perspective view of a portable telephone incorporating an input device according to the present invention;
FIG. 2 is a schematic view of an example of information displayed on the screen of a display of the portable telephone;
FIG. 3 is a circuit block diagram of the input device;
FIG. 4 is a schematic view illustrating a motion input mode;
FIG. 5 is a schematic view illustrating the motion input mode; and
FIG. 6 is a flow chart of the operation of the input device.

### DESCRIPTION OF THE PREFERRED EMBODIMENT

A portable telephone incorporating an input device according to the present invention will be described below with reference to the accompanied drawings.

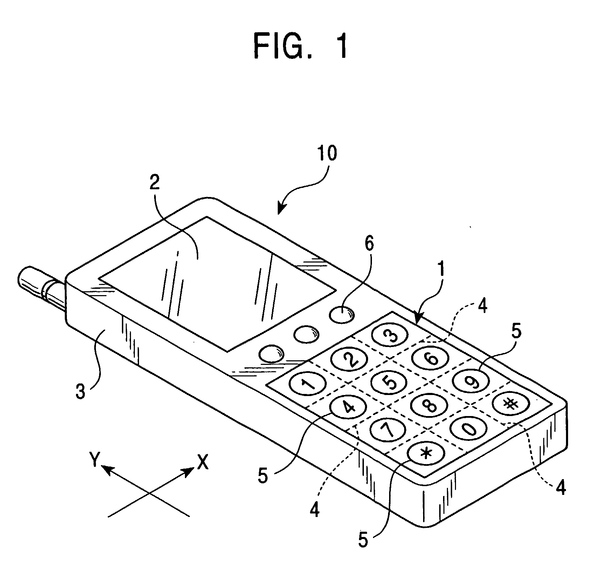

Referring now to FIG. 1, a portable telephone 10 has a casing (housing) 3. The casing 3 includes an operating surface on which an input device 1, a display (display means) 2, and switches 6 are arranged. It is to be noted that the portable telephone 10 illustrated herein is merely an example. Thus, other switches or the like may be provided on the casing 3, or alternatively, just the input device 1 and the display 2 may be provided thereon.

The input device 1 includes a combination of a plurality, i.e., a total of 12 detection members 4 arranged vertically and horizontally, such that the overall profile of the input device 1 is square. The detection members 4 are arranged adjacent to one another, and the surfaces of the detection members 4 respectively serve as individual input portions.

The detection members 4 is a capacitance or pressure-sensitive type and has a simple mechanism, and can detect the ON/OFF switching upon the touch of a finger, pen, or the like. Each detection member 4 may also be of a type that can detect the movement of a manipulator such as a finger or pen on the surface of the detection member 4 in addition to the capability of detecting the ON/OFF switching.

In the case of capacitance type, an x-direction detecting electrode and a y-direction detecting electrode, which are formed of an Ag (silver) based paste, are arranged to oppose each other in a matrix on both sides of a resin sheet formed of PET (polyethylene terephthalate) or the like. The resin sheet and the electrodes are arranged on a substrate having a resin sheet on which a conductive pattern is formed so that flexible deformation is provided. This allows inputting of coordinate data upon the touch of a dielectric body such as a finger on the surfaces of the detection members 4.

In the case of pressure-sensitive type, the detection members 4 include a resistance element having potentials in x- and y-directions and a conductive element facing the resistance element. Upon the touch of a finger or the like, the conductive element and the resistance element are brought in contact with each other, causing the resistance value to change, which allows inputting of coordinate data.

Indicators 5 are formed on the respective surfaces of the detection members 4 by printing or the like, with each indicator 5 indicating an input portion for a number, symbol, or the like. A sheet, made of a resin such as PET, may be stacked on the surfaces of the detection members 4 so that indicators 5 each indicating the input portion for a number, symbol, or the like are printed on the obverse surface of the sheet.

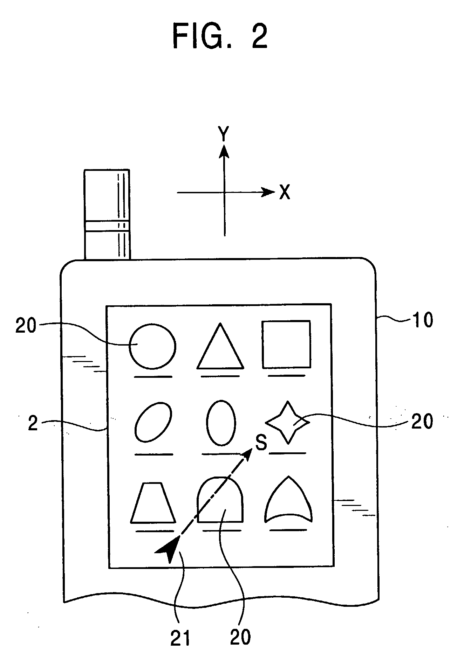

The display 2 is display means for displaying various pieces of information, and can display information input from the input device 1 or information received from another portable telephone or the like. For example, as shown in FIG. 2, with a plurality of icons 20 being displayed in the x- and y-directions in a matrix, selecting and executing one of the icons 20 causes the displayed information to be switched to the previous or subsequent screen, or causes a predetermined program to run.

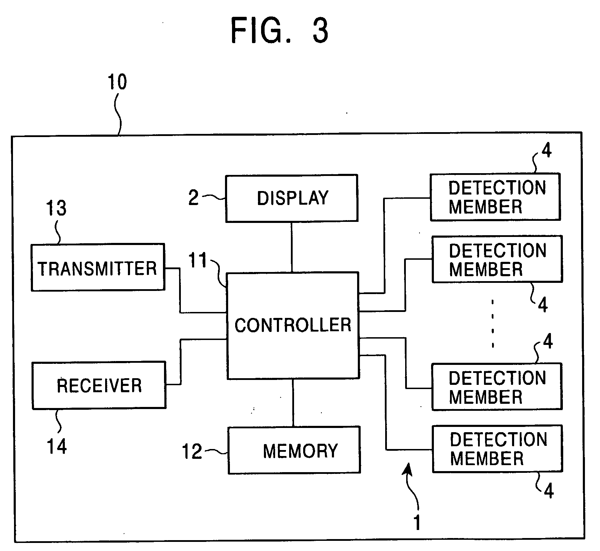

Referring now to FIG. 3, the portable telephone 10 includes a controller 11 to which the display 2 and the detection members 4 are connected. Also connected to the controller 11 are a memory 12, a transmitter 13, a receiver 14, etc.

The controller 11 allows switching between different types of modes, that is, a motion input mode and a single input mode, each handling an operation signal different from the other. The switching between the motion input mode and the single input mode may be made by operating one of the detection members 4 or by external input using another input means such as the switches 6. Alternatively, the switching between the modes may be automatically made by means of software, in accordance with a displayed screen of the display 2.

In the single input mode, when one of the detection members 4 is operated, the operation is individually processed as an operation input with respect to one of the input portions. In this mode, it is possible to switch between ON and OFF, and when the indicator 5 is pressed or touched with a finger, such an operation is detected and an operation signal corresponding to the input portion of the indicator 5 is generated by the controller 11. For example, in FIG. 1, when the indicator 5 on which number "1" is indicated is pressed, number "1" is displayed on the screen of the display 2, or a command assigned to "1" is then executed.

In the single input mode, when one of the detection members 4 is touched with a finger, a corresponding input signal is sent to the controller 11 and is reflected on the screen of the display 2.

In the motion input mode, when some of the detection members 4 are continuously operated, the operation is processed as a motion operation input in accordance with the positional relationship of the operated detection members 4. In this case, moving a finger on the input device 1 causes generation of coordinate data in an X-Y plane in accordance with the moving direction of the finger, regardless of indications provided on the indicators 5. When the display 2 is in the exemplary state shown in FIG. 2, the coordinate data (motion input information) is converted into a signal for moving the cursor 21, so that the movement of the cursor 21 is displayed on the screen of the display 2.

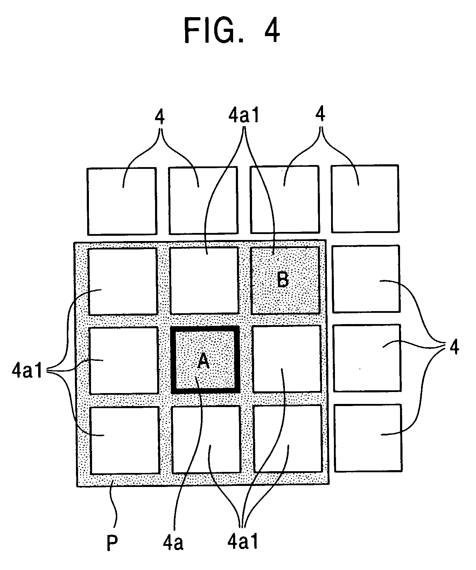

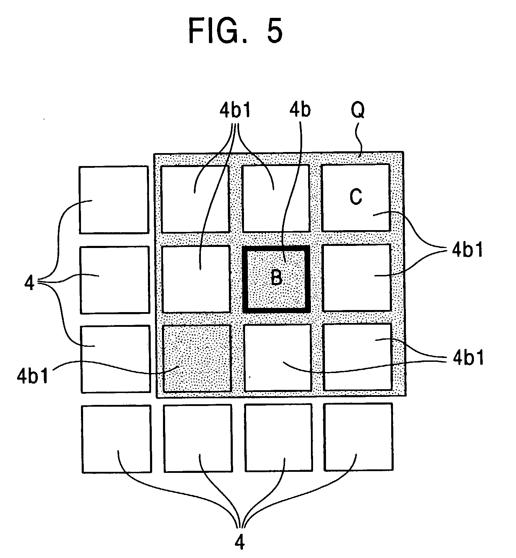

Detection means in the motion input mode will now be described with reference to FIGS. 4 and 5. The basic operation of the input device 1 illustrated therein is the same as that of the input device 1 described above, except for the slightly different arrangement of the detection members 4. The number and/or arrangement of the detection members 4 can be changed as appropriate. For example, the overall shape is not limited to a square, so that the detection members 4 can be combined into any shape such as a circular, rhombic, polygonal, or irregular shape, depending on an apparatus on which the input device 1 is mounted. In addition, the shape of each detection member 4 is not limited to a square, and can take another shape such as a triangle.

In the example shown in FIG. 4, 16 detection members 4 are arranged in a square so as to be adjacent to one another. The detection member 4a indicated at point A in FIG. 4 represents the first position touched with a finger. Upon the touch of a finger on the detection member 4a at point A, the detection member 4a is recognized as a reference position, and a plurality of detection members 4a1, which is in the area indicated by zone P (surrounded by the square in FIG. 4), located adjacent to the detection member 4a are energized and are set into a detectable state. In this state, moving the finger from the detection member 4a at point A allows the detection as to which direction the finger has moved.

In this manner, all of the detection members 4 are not always energized to be in a detectable state, so that the loss of energy consumption can be minimized. This arrangement can be significantly advantageous, particularly when a large number of detection members 4 are arranged.

Subsequent to the operation described above, when the finger is moved from the detection member at point A to the detection member at point B, as shown in FIG. 5, the detection member 4b at point B is recognized as a reference position. As a result, detection members 4b1, which are in the area indicated by zone Q, located adjacent to the detection member 4b are energized to be set into a detectable state.

Referring back to the example shown in FIG. 1, when the detection member 4 with number "8" is pressed, the "8" detection member 4 is recognized as a reference position, so that the detection members 4 with "4", "5", "6", "7", "9", "*", "0", and "#" which are adjacent to the "8" detection member 4 are set into a detectable state. Alternatively, when the detection member 4 with numeral "1" is pressed, the "1" detection member 4 is recognized as a reference position, so that the "2", "4", and "5" detection members 4 which are adjacent to the "detection member 4 are set into a detectable state.

Thus, moving a finger from the detection member at point A to the detection member at point B, in the example shown in FIG. 2, causes the generation of coordinate data representing the movement of the cursor 21 in the direction S. At this point, if the further movement of the cursor 21 in the direction S is desired due to an insufficient movement of the cursor 21, sliding the finger from the detection member at B toward the detection member at C can cause the cursor 21 to move further in the direction S. Alternatively, removing the finger from the input device once and pressing (or touching) the detection member at point A again such that point A is set to a reference position and then moving the finger to the detection member at B can also cause the cursor 21 to move further in the direction S.

In the portable telephone 10 incorporating the input device 1 of the present invention, the cursor 21 displayed on the display 2 can be moved in various directions in a radial pattern, thereby allowing for prompt operation. In particular, this input device 1 can be significantly advantageous as the size of the screen of the display 2 is increased and the number of menus is increased.

In the portable telephone 10, the memory 12 temporarily stores information concerning a reference position, and the controller 11 compares the reference position with a reference position that is subsequently detected, so as to determine the direction and amount of the movement. A memory means may also be provided in the portable telephone 10 to store various pieces of information such as personal information. The transmitter 13 and the receiver 14 can send and receive information such as audio data and character data.

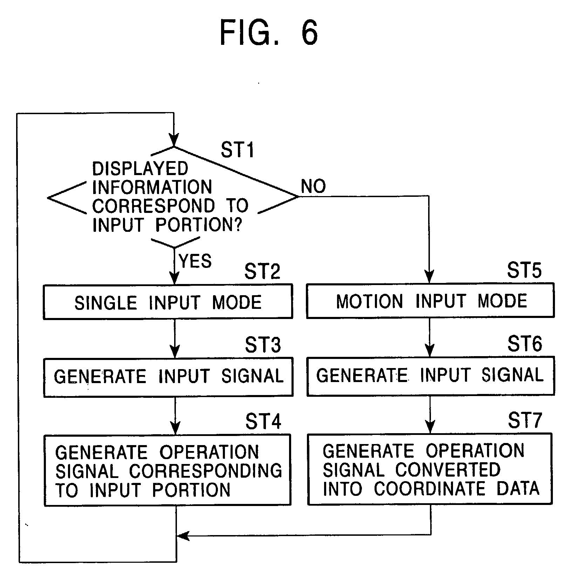

The processing within the portable telephone 10 incorporating the input device 1 will now be described. Referring to FIG. 6, in step 1 (ST1), a determination is made as to whether the display 2 is in a state in which an operation corresponding to the individual input portions of the indicators 5 can be input. If the display 2 is determined as being in that state (Yes) in step 1 (ST1), the controller 11 changes the setting to a single input mode (ST2). In the single input mode, it is possible to input information by simply pressing or touching one of the indicators 5 of the detection members 4. Next, the process proceeds to step 3 (ST3), in which, when one of the indicators 5 of the detection members 4 is pressed, an input signal that corresponds to the input portion of the pressed indicator 5. The process then proceeds to step 4 (ST4), in which the input signal is converted by the controller 11 into an operation signal that has been assigned to the individual detection member 4, so that information displayed on the display 2 is changed to an image in accordance with the operation signal.

On the other hand, in step 1 (ST1), when information displayed on the display 2 does not correspond to an input portion (No), the controller 11 changes the setting into the motion input mode (ST5). In the motion input mode, an input operation that does not correspond to the input portion of the indicator 5 of each detection member 4 is possible. Next, the process proceeds to step 6 (ST6), in which continuously moving the finger from one detection member 4 to another detection member 4 causes the generation of an input signal. The process then proceeds to step 7 (ST7), in which the input signal is converted by the controller 11 into an operation signal as coordinate data. In that process, the controller 11 also computes a moving direction to generate the operation signal and information on the display 2 is changed to an image in accordance with the operation signal.

As described above, the processes at steps ST1 to ST4 or at steps ST1 and ST5 to ST7 are repeated.

The input device according to the present invention is not limited to the specific embodiment described above. For example, the display means may be provided on a housing other than the housing on which the input device is provided. Examples include a remote controller for a TV receiver. In this case, the single input mode allows channel switching of the TV receiver and the motion input mode allows menu selection displayed on the screen thereof.

Alternatively, the input device according to the present invention may be used for a remote controller for equipment such as computers, audiovisual apparatuses, or other household electric appliances, or may be used with an operation panel directly incorporated in the body of such equipment.

In addition, a dome-like inverting plate may be provided on the reverse side of the input portion of each detection member 4 of the input device 1, such that, when the surface of the detection member 4 is pressed with a finger, the dome-like inverting plate is inverted. With this arrangement, a tactile feedback can be provided to the finger, thereby providing an operation sensation to the operator.

## Claims

1. An input device which is controlled by a controller, the input device comprising:
a plurality of detection members which are provided on an operating surface and which are switched on and off; and
indicators which indicate corresponding input portions of the detection members,
wherein the controller generates an operation signal in accordance with the switching-on or switching-off, and
wherein the controller allows a single input mode, in which operation of one of the detection members is processed as an operation input with respect to a corresponding one of the input portions, to be set, and allows a motion input mode, in which continuous operation of some of the detection members is processed as a motion operation input in accordance with the positional relationship of the operated detection members, to be set.

2. An input device which is controlled by a controller, the input device comprising:
a plurality of detection members which are provided on an operating surface and which detect a contact and a movement of a manipulator; and
indicators which indicate corresponding input portions of the detection members,
wherein the controller generates an operation signal in accordance with the operation of at least one of the detection members, and
wherein the controller allows a single input mode, in which a touch of a manipulator on one of the detection members is processed as an operation input with respect to a corresponding one of the input portions, to be set, and allows a motion input mode, in which continuous movement of the manipulator across some of the detection members is processed as a motion operation input in accordance with the positional relationship of the operated detection members, to be set.

3. An input device according to claim 1 or 2, wherein the single input mode and the motion input mode are switched by external input using another input means that is provided on the detection member or the operating surface.

4. An input device according to claim 1 or 2, wherein, in the state in which the motion input mode is set, when one of the detection members is operated, the controller recognizes the input portion of the operated detection member as a reference position and sets a plurality of the detection members that are adjacent to the operated detection member into a detectable state.

5. An input device according to claim 4, wherein, subsequent to the operation of the detection member, when one of the detection members that are adjacent to the operated detection member is operated, the controller recognizes the input portion of the newly operated detection member as a new reference position and sets a plurality of the detection members that are adjacent to the newly operated detection member into a detectable state.

6. An input device according to any preceding claim, wherein the input device is provided with display means, and in the setting of the motion input mode, the display means displays information in accordance with the motion input information resulting from the operation of the detection members.

7. An input device according to claim 6, wherein the display means is provided on the same housing on which the detection members are provided, or is provided separately from the housing.
